# FASCICULE DE BREVET EUROPEEN

(11) **EP 1 832 471 B1**
(45) Date de publication et mention de la délivrance du brevet: **14.07.2010**
(21) Numéro de dépôt: 07290295.0
(22) Date de dépôt: 06.03.2007
(51) Int. Cl.: B60Q 1/14, B60Q 1/08

(54) **Procédé de commande de commutation automatique de projecteur de véhicule**
Verfahren zur Steuerung der automatischen Schaltung eines Fahrzeugscheinwerfers
Method of controlling the automatic switching of a vehicle headlamp

(30) Priorité: 10.03.2006 FR 0602156
(43) Date de publication de la demande: 12.09.2007
(73) Titulaire: VALEO VISION, 93012 Bobigny Cedex (FR)
(72) Inventeur: Rebut, Julien, 75010 Paris (FR)

(56) Documents cités:
- WO-A-2004/034183
- DE-A1- 10 156 649
- DE-A1- 10 323 560

## Description

L'invention concerne de manière générale le domaine de l'éclairage pour des véhicules automobiles. Plus particulièrement, l'invention s'intéresse aux modes de commande des projecteurs permettant de faire évoluer automatiquement les projecteurs d'un mode de fonctionnement à un autre. Il peut s'agir par exemple de la commutation automatique des projecteurs d'un véhicule d'un état d'éclairage de type «feux de route» vers un état d'éclairage «feux de croisement/code», quand est détectée une situation susceptible de générer un éblouissement pour le conducteur venant en sens inverse, ou pour le conducteur du véhicule qui précède sur la route dans le même sens (éblouissement via les rétroviseurs). Mais on peut aussi penser à d'autres types de commutation, par exemple pour passer d'un mode « éteint » à un mode « code ou route ».

Il est déjà proposé dans la littérature des dispositifs embarqués permettant une commutation code/route des projecteurs, dispositifs ayant recours à différents types de capteurs/caméras et modes de traitement des images recueillies.

Ces dispositifs sont complexes, et il est très important qu'ils soient fiables et robustes, la sécurité étant en jeu. Ils doivent notamment arriver à interpréter correctement la nature des sources de lumière détectées par les capteurs. Or, il est délicat de s'assurer que les sources de lumière présentes dans le paysage sont issues de projecteurs de véhicules croisant ou de feux de signalisation de véhicule situés sur la même voie de roulage, et qu'il ne s'agit pas simplement de réflexions de la lumière des projecteurs de son propre véhicule ou d'autres véhicules sur des panneaux de signalisation. On risque, en cas de confusion, de faire basculer de façon intempestive les projecteurs du mode route au mode code, ce qui va limiter inutilement la visibilité du conducteur du véhicule. On risque aussi de faire basculer tardivement le projecteur du mode route ou mode code du fait d'une erreur de détection, ce qui conduit à éblouir le conducteur du véhicule croisant.

Des stratégies fondées sur l'analyse de trajectoires permettent d'identifier avec un niveau de confiance acceptable les sources lumineuses parasite comme l'éclairage urbain, et, dans une plus faible mesure, les véhicules croisant le véhicule en question, mais elles peuvent demeurer ambiguës.

C'est plus particulièrement vrai quand les sources de lumière sont éloignées du véhicule considéré (quelques centaines de mètres), également des sources qui ont donc un faible déplacement dans l'image détectée par les capteurs. Or c'est entre 600 et 1000 mètres qu'il est nécessaire de faire passer le projecteur d'un mode route vers un mode code pour éviter l'éblouissement du conducteur roulant en sens inverse, et pour que le passage route / code automatique se fasse de façon similaire à celui d'un passage manuel. Et c'est au-delà d'environ 400 mètres avec le véhicule précédent que l'on peut refaire passer le projecteur d'un mode code à un mode route.

Une première solution consiste à utiliser des capteurs aptes à détecter la couleur des lumières détectées. On peut ainsi faire la différence entre la lumière émise par des feux arrière, la lumière émise par des projecteurs ou la lumière qui n'est que la réflexion de lumière sur des panneaux de signalisation. L'information spectrale est effectivement utile, mais cette méthode requiert des capteurs couleur, qui, par ailleurs, présentent des inconvénients. Ils sont notamment munis de filtres susceptibles de vieillissement précoce. Ils sont en outre moins sensibles aux niveaux de gris que les capteurs noir et blanc, ce qui est gênant si on envisage d'utiliser ces capteurs pour réaliser plusieurs fonctions, notamment non seulement pour une fonction de commutation code/route, mais aussi une fonction de vision de nuit et/ou une fonction LDWS (en anglais « Lane Departure Warning Signal », en français avertissement de sortie de voie involontaire).

L'invention a alors pour but de remédier à ces inconvénients. Elle a notamment pour but de rendre plus fiables les systèmes de commande automatique des projecteurs, de réduire encore les erreurs de détection entre les « vraies » sources lumineuses nécessitant de déclencher une modification automatique du mode d'éclairage du projecteur, et les sources lumineuses parasites à ignorer. Subsidiairement, elle cherche à atteindre ces buts sans avoir recours à des capteurs couleur.

Un procédé selon le préambule de la revendication 1 et un dispositif selon le préambule de la revendication 13 sont connus du document WO 2004/034183.

L'invention a pour objet un procédé pour commander une commutation automatique de projecteur d'un véhicule, notamment d'un véhicule automobile, d'un premier mode d'éclairage vers un second mode d'éclairage, ledit procédé étant mis en oeuvre en conduite nocturne dans ledit véhicule et comprenant des étapes suivantes :
a- acquisition d'images représentant des scènes nocturnes de route par un capteur noir et blanc,
b- extraction dans les images des zones correspondant à des sources de lumière,
c- discrimination du type de sources lumineuses selon la distribution des niveaux d'intensités lumineuses dans lesdites zones.

Dans la présente demande, le terme « extraction » est à comprendre au sens couramment utilisé dans le domaine du traitement de l'image, à savoir l'identification d'une zone d'une image. Une zone d'une image est identifiée ou extraite par la détermination de sa localisation dans l'image et de ses limites avec le reste de l'image.

Par exemple, l'extraction d'objets d'une image correspondant à des caractéristiques définies, correspond à l'identification dans l'image de la zone correspondant aux objets qui auront lesdites caractéristiques définies, cette zone étant identifiée par sa position (ou coordonnées) dans l'image et par ses limites au sein de l'image.

On utilise donc selon l'invention un capteur noir et blanc : plutôt que d'identifier les sources de lumière détectées par leurs couleurs, on les identifie ici par les variations d'intensité lumineuses des zones détectées correspondant à ces sources de lumière. On a en effet observé que certaines sources de lumière avaient des distributions d'intensité suffisamment caractéristiques pour les discriminer avec un capteur noir et blanc. Rappelons brièvement que les capteurs noir et blanc présentent des avantages par rapport aux capteurs couleur, notamment parce qu'ils peuvent aussi être utilisés pour d'autres fonctions dans le véhicule, comme la vision de nuit (infrarouge), ce qui n'est pas le cas des capteurs couleur. Il faut choisir le capteur noir et blanc approprié, ayant notamment la sensibilité et la dynamique suffisantes pour détecter tous les niveaux de gris nécessaires.

Avantageusement, l'étape c- de discrimination du type de sources lumineuses comprend une sous étape c0 de seuillage des zones permettant d'identifier des sources de lumière de type A saturant en intensité lumineuse le capteur, dont les lumières de projecteurs de véhicule croisant.

On est parti de la constatation que les lumières des projecteurs étaient d'une très forte intensité par comparaison avec d'autres sources de lumière que l'on peut rencontrer sur la route, comme des feux de signalisation : en réglant de façon appropriée la sensibilité du capteur de façon à ce qu'il sature quand il « voit » un projecteur à la distance usuelle à laquelle un conducteur commuterait manuellement ses projecteurs du mode route au mode code, on peut facilement identifier qu'une source lumineuse est de type projecteur croisant, et donc, ensuite et après validation (en vérifiant par exemple sur plusieurs images acquises successivement), faire passer le projecteur automatiquement de « route » en « code ».

Avantageusement encore, l'étape c- de discrimination comprend :
C1-la détermination des niveaux d'intensité lumineuses dans les zones non seuillées /non saturant le capteur et,
C2-une mesure de similarité entre la distribution d'intensité lumineuse de chaque zone non seuillée et une distribution modélisée de type gaussienne.
C3- une de recherche de modèle pour les lumières émises par les véhicules arrière lointains : les « signatures » des feux en représentation de distribution de niveaux d'intensité lumineuses sont caractéristiques (avec deux « bosses ») et permettent, en recherchant ces formes, de les discriminer.

De préférence, les étapes C0, C1 et C3 sont effectuées en parallèle: une zone seuillée selon C0 ou selon C3, par exemple, n'est pas traitée selon C1/C2.

En effet, il a été observé dans le cadre de l'invention qu'il existait un réel risque de confusion entre deux types de sources : les sources correspondant à des feux de signalisation de véhicule précédent le véhicule équipé du dispositif de commutation automatique, et les sources qui ne sont que des sources secondaires correspondant à des panneaux de signalisation réfléchissant la lumière, provenant par exemple des projecteurs du véhicule équipé du dispositif lui-même. Or il est nécessaire que le système puisse faire la différence, et puisse ignorer les sources secondaires (en laissant les projecteurs en mode route) et prendre en compte les sources de type feu de signalisation (en faisant commuter les projecteurs d'un mode route à un mode code).

Pour ce faire, et sans indication de couleur puisque le capteur utilisé est un capteur noir et blanc, on a observé que les feux de signalisation laissaient sur l'image acquise par le capteur une zone d'intensité lumineuse qui varie d'un point à un autre de la zone. La représentation tri dimensionnelle de l'intensité lumineuse (en z) d'un point lumineux/d'un pixel de la zone en fonction de la localisation de ce pixel dans la zone en question, (en x,y) se rapproche fortement d'une distribution en forme de gaussienne en trois dimensions. Au contraire, celle correspondant à une source de lumière secondaire est éloignée d'une forme de gaussienne, elle présente notamment des variations locales d'intensité correspondant à des détails, que l'on ne retrouve pas avec des feux de signalisation.

L'invention tire alors partie de ces différences en comparant leur distribution d'intensité lumineuse selon qu'elle se rapproche d'une gaussienne (feux de signalisation, présentant un niveau de similarité élevé avec une forme en gaussienne) ou non (sources secondaires à ignorer, présentant un niveau de similarité faible avec une forme en gaussienne). Le calcul du niveau de similarité est aisément réalisable à l'aide de calculateurs/moyens informatiques embarqués dans le véhicule à partir des distributions réellement mesurées, notamment par approximation.

C'est efficace et s'est révélé très fiable. Cette pratique peut être extrapolée à d'autres types de sources lumineuses, dès qu'elles ont des représentations de variation d'intensité lumineuse caractéristiques et répétitives. Dans ce cas, l'étape C2 correspond à une mesure de similarité entre la distribution d'intensité lumineuse de chaque zone non seuillée et la distribution modélisée de ce type de source lumineuse.

L'étape c- de discrimination trie ainsi les zones de lumière selon qu'elles sont au-delà ou en deçà d'un niveau de similarité donné, les zones au-delà dudit niveau correspondant à des sources de lumière de type B comprenant les feux arrière de véhicule, les zones en deçà dudit niveau correspondant à des sources de lumières secondaires de type C comme des panneaux de signalisation réfléchissants.

Le procédé selon l'une des revendications précédentes comprend avantageusement l'étape de :
e- commande de la commutation du projecteur d'un mode d'éclairage à un autre mode d'éclairage prenant en compte les résultats de l'étape c- de discrimination, notamment commande d'un mode d'éclairement de type route à un mode d'éclairement de type code en cas d'identification de sources lumineuses de type A ou de type B, ou maintien en mode route en cas d'identification de sources lumineuse de type C.

Pour augmenter la fiabilité dans la discrimination par type de sources lumineuses, il est préférable que les étapes a- d'acquisition, b- d'extraction, c- de discrimination au moins soient répétées plusieurs fois, et que leurs résultats soient comparés avant de déclencher, en cas de concordance suffisante, l'étape e- de commande de commutation.

Avantageusement, le procédé selon l'invention comprend aussi une étape g/h- de suivi temporel afin d'identifier les trajectoires des zones correspondant à des sources de lumière. Donc cette étape, en suivant la trajectoire d'une source dans une succession d'images, de comparer le comportement de cette trajectoire à des comportements type, comme une trajectoire de type dépassement du véhicule, du type trajectoire de véhicule croisant dans voie de roulage en sens opposé, et de fiabiliser encore l'identification des sources lumineuses.

En parallèle de l'étape d'identification de trajectoire, on peut aussi prévoir une temporisation pour fiabiliser la différenciation entre des feux ou projecteur de moto et des panneaux de signalisation : si la zone correspondant à une source lumineuse reste dans l'image, ne »sort pas de la scène » dans une période de temps déterminée, on valide qu'il s'agit bien d'une lumière de moto, et non d'un panneau de signalisation. Ce temps d'attente pour vérifier le déplacement ou non de la zone dans l'image peut être associé à l'identification de trajectoires : tant qu'on n'a pas déterminé de trajectoire spécifique, on peut procéder à une temporisation dans la commande des projecteurs, et si, au bout d'un temps déterminé, connaissant la vitesse du véhicule, la source reste dans l'image, on peut commander la commutation route/code.

Avantageusement, le procédé comprend aussi une étape i- après l'étape a- d'acquisition d'images, ladite étape i- visant à supprimer des images les zones correspondant à des sources de lumière secondaires de formes géométriques prédéterminées. De préférence, l'étape i- comprend une extraction des contours de la zone correspondant à une source lumineuse dans l'image, une extraction des segments linéaires, notamment horizontaux et verticaux, de ladite zone, une constructions d'objets géométriques à partir de ces segments, puis une suppression desdits objets correspondent à des formes géométriques prédéterminées, notamment des formes rectangulaires représentant les zones réfléchissantes de poteaux de signalisation.

En effet, il s'est avéré qu'à part les panneaux de signalisation, il existait un autre type de sources lumineuses secondaires qu'il est utile d'identifier, afin que le système de commande les ignore: ce sont les zones réfléchissantes, de forme géométrique simple comme un carré ou un rectangle, qui sont présentes sur des poteaux bordant les routes, tout particulièrement pour signaler des virages. Ces zones, le plus souvent de couleur blanche, sont spécialement étudiées pour réfléchir fortement la lumière des projecteurs : elles tendent donc à saturer le capteur. L'invention propose donc, lors de cette étape préalable, d'identifier dans les images si on a affaire à une telle source secondaire, et, dans l'affirmative, de supprimer les zones correspondantes dans les images avant de faire le seuillage et la discrimination décrits plus haut.

De préférence, le procédé selon l'invention comporte une étape j- de détection des bords de voie de roulage LDWS. On utilise alors cette information pour mettre à jour la position de l'horizon (On définit les lignes de fuite correspondant aux bords détectés, le croisement des lignes de fuite permettant de situer l'horizon).

De préférence, le procédé selon l'invention comporte une étape h-d'estimation de la localisation de l'horizon dans les images acquises à l'étape a-. Comme vu plus haut, cette estimation de localisation peut se faire en exploitant les résultats de l'étape J- de détection des bords. Ceci permet, là encore, de fiabiliser l'identification des sources lumineuses détectées : on peut décider de les ignorer si cette étape détermine qu'elles se situent bien au dessus de la ligne d'horizon estimée. Cela peut aussi être un moyen pour confirmer la détection d'un feu ou d'un projecteur de moto. En effet, on peut confirmer que la source lumineuse est de type feu ou projecteur de véhicule en détectant deux zones similaires couplées dans l'image. Par contre, une zone seule peut correspondre soit à une source secondaire à ignorer, soit à un feu ou un projecteur de véhicule dont le deuxième feu /le deuxième projecteur est endommagé, soit à un feu ou projecteur de moto. Quand une source unique est détectée, et qu'en plus elle est à l'horizon, on fiabilise l'information qu'il s'agit bien d'un feu/d'un projecteur et non d'une source secondaire, avec haute probabilité de la présence d'une moto.

L'invention concerne aussi le dispositif permettant de mettre en oeuvre le procédé décrit plus haut, avec tous les moyens adaptés à réaliser toutes les étapes de celui-ci.

Elle concerne notamment un dispositif pour commander une commutation automatique de projecteur d'un véhicule, notamment d'un véhicule automobile, d'un premier mode d'éclairement vers un second mode d'éclairement, ledit dispositif étant activé en conduite nocturne dans ledit véhicule, comprenant :
a- des moyens d'acquisition d'images représentant des scènes nocturnes de route comprenant un capteur noir et blanc,
b- des moyens d'extraction dans les images des zones correspondant à des sources de lumière,
c- des moyens de discrimination du type de sources lumineuses selon la distribution des niveaux d'intensités lumineuses dans lesdites zones.

Ce dispositif comprend de préférence :
f- des moyens de commande des projecteurs d'un mode d'éclairage à un autre mode d'éclairage prenant en compte les résultats obtenus avec les moyens c- de discrimination.

Avantageusement, le capteur utilisé dans le procédé et le dispositif décrit plus haut peut être partagé avec au moins un autre dispositif équipant ledit véhicule (tel qu'un dispositif de vision de nuit avec affichage à proximité du tableau de bord d'informations à partir d'images infrarouge).

L'invention concerne aussi tout moyen de stockage d'information, mémorisant un ou plusieurs programmes dont l'exécution autorise une mise en oeuvre du procédé décrit plus haut.

Elle concerne également tout programme d'ordinateur sur un moyen de stockage d'information, comportant une ou plusieurs séquences d'instructions exécutables par un microprocesseur et/ou un ordinateur, l'exécution desdites séquences d'instructions autorisant une mise en oeuvre du procédé décrit plus haut.

D'autres aspects et avantages de la présente l'invention apparaîtront à la lecture de la description d'un mode de réalisation particulier non limitatif, faite en référence aux dessins annexés, dans lesquels :
La figure 1 représente la structure générale d'un dispositif de commande de commutation automatique selon l'invention,
La figure 2 représente une configuration matérielle d'une unité de traitement utilisée par l'invention,
la figure 3a,3b,3c montre la représentation en trois dimensions de la variation d'intensité lumineuse de trois types de sources lumineuses,
la figure 4a,4b illustre le traitement de discrimination entre deux types de sources lumineuses,
la figure 5 représente un algorithme d'une mise en oeuvre d'un procédé selon l'invention
La figure 6a,6b montre la représentation en deux et trois dimensions de la variation d'intensité lumineuse d'un autre type de sources lumineuses.

Ces figures sont schématiques afin d'en conserver la clarté.

L'invention est maintenant décrite à l'aide d'un exemple non limitatif d'un dispositif de commande de commutation automatique des projecteurs d'éclairage d'un véhicule automobile d'un mode d'éclairage «route» vers un mode d'éclairage «code/croisement».

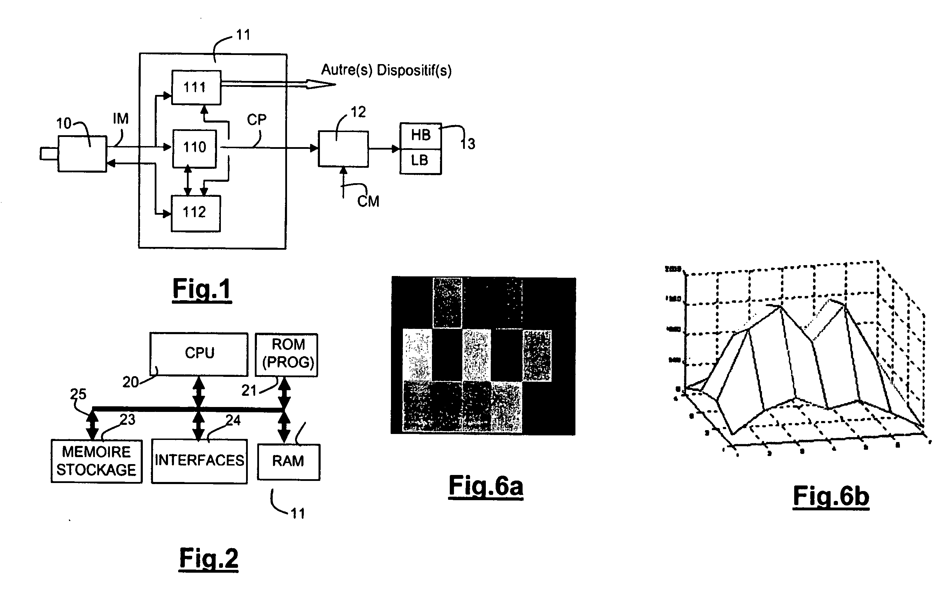

En référence à la figure 1, le dispositif de commande de commutation automatique de projecteurs d'éclairage selon l'invention commande la commutation des projecteurs d'éclairage 13 d'un véhicule et comprend essentiellement une caméra 10, une unité de traitement 11 et un circuit de commutation 12.

Comme cela est bien connu, les projecteurs 13 peuvent prendre différents états d'éclairement/signalisation tels que «feux de conduite de jour » (DRL pour «Day-time Running Light» en anglais), «feux de position», «feux de croisement» et «feux de route». Les états «feux de croisement» LB et «feux de route» HB sont représentés schématiquement à la Fig.1.

La caméra 10 est installée dans le véhicule de telle manière à prendre des scènes de route successives depuis l'avant du véhicule. La caméra 10 délivre des images IM à l'unité de traitement 11.

Dans les modes de réalisation décrits dans la présente demande, la caméra 10 utilise un capteur noir et blanc, de dynamique élevée et de grande sensibilité. (On rappelle que la sensibilité d'un capteur correspond à sa capacité à détecter de faibles variations d'intensité lumineuse, et que sa dynamique correspond à sa capacité à détecter sur une grande plage d'intensités lumineuses). Ce capteur a de préférence une dynamique de 120 db, avec un signal codé sur 12 bits, soit 4096 niveaux de gris (on comprend dans l'ensemble du présent texte par « niveaux de gris » la palette des différents niveaux d'intensité lumineuse détectables).

L'image IM fournit par la caméra 10 est numérisée par un convertisseur analogique-numérique (non représenté) implanté dans l'unité de traitement 11. Dans la forme de réalisation représentée à la Fig.1, l'image IM numérisée est fournie à des modules logiciels de traitement 110 et 111.

Le module logiciel de traitement 110 est dédié, dans l'unité de traitement 11, au fonctionnement du dispositif de commande de commutation automatique de projecteurs d'éclairage selon l'invention. Conformément à l'invention, le module logiciel de traitement 110 est apte à traiter l'image IM1 et à en extraire une information CP pour la commande des projecteurs 12. Dans ce mode de réalisation de l'invention, l'information de commande de projecteur CP commande la commutation automatique des projecteurs de l'état «feu de route» à l'état «feu de croisement».

L'élément référencé 111 représente schématiquement différents autres modules logiciels de traitement implantés dans l'unité de traitement 11 et qui remplissent des fonctions de traitement autres que celles requises par le dispositif de commande de commutation automatique de projecteurs d'éclairage selon l'invention. Les modules logiciels 111 appartiennent à d'autres dispositifs qui sont embarqués dans le véhicule et qui partagent les images IM et l'unité de traitement 11 avec le dispositif de commande de commutation automatique de projecteurs d'éclairage selon l'invention. Ces autres dispositifs sont par exemple un système d'aide à la navigation sur route et/ou un dispositif de détection de virage pour la commande des projecteurs dans les virages («bending light » en anglais).

Outre l'information de commande CP, le circuit de commutation 12 reçoit également une information de commande manuelle CM. L'information de commande manuelle CM est représentative d'un actionnement manuel du commodo d'éclairage par le conducteur du véhicule. Cet actionnement manuel CM par le conducteur reste toujours prioritaire par rapport à la commande automatique CP des projecteurs.

Comme montré à la Fig.2, l'unité de traitement 11 est d'une architecture classique et comprend une unité centrale de traitement CPU 20 telle qu'un microprocesseur, une mémoire morte ROM ou EEPROM 21, une mémoire vive RAM 22, une mémoire de stockage 23 par exemple de type FLASH, des interfaces 24 et un bus de communication interne 25. Dans un autre mode de réalisation de l'invention, l'unité de traitement 11 est également équipée d'un moyen de communication homme-machine, tel qu'un clavier, à travers lequel le conducteur peut sélectionner différents modes de fonctionnement.

L'unité de traitement 11 exécute un ou plusieurs programmes PROG qui autorisent la mise en oeuvre du procédé selon l'invention.

Dans la configuration de la Fig.2, le code exécutable des programmes PROG est logé en partie ou en totalité dans la mémoire ROM 21.

Le code exécutable des programmes PROG peut aussi être chargé en partie dans la mémoire de stockage 23, via les interfaces 24, à partir par exemple d'une disquette introduite dans un lecteur de disquette ou à travers une liaison de communication reliée par exemple à un micro-ordinateur utilisé pour la configuration de l'unité de traitement 11.

Bien entendu, la disquette à partir de laquelle sont chargés les programmes PROG peut être remplacée par un disque compact CD-ROM ou une carte mémoire. De manière plus générale, tout moyen de stockage d'information lisible par un ordinateur ou un microprocesseur, intégré ou non dans l'unité de traitement 11, éventuellement amovible, est adapté à mémoriser, en partie ou en totalité, les programmes PROG.

L'unité centrale 20 commande l'exécution des instructions ou portions de code des programmes PROG, les instructions étant stockées dans la mémoire ROM 21 et/ou la mémoire de stockage 23 et/ou les autres moyens de stockage d'information indiqués ci-dessus.

Lors de la mise sous tension de l'unité de traitement 11, les programmes PROG stockés dans une mémoire non volatile, telle que la mémoire ROM 21 ou la mémoire de stockage 23, sont transférés en partie ou en totalité dans la mémoire volatile RAM 22 qui contiendra alors le code exécutable transféré des programmes PROG ainsi que différents registres pour mémoriser des variables et paramètres nécessaires à la mise en oeuvre du procédé selon l'invention.

On notera également que l'unité de traitement 11 peut prendre la forme d'un appareil programmé. Cet appareil programmé contient alors le code exécutable des programmes PROG sous une forme figé dans un circuit intégré à application spécifique (ASIC).

Comme décrit précédemment, le système de commutation doit être capable de faire la différence entre les projecteurs avant, les feux arrière et les « fausses » sources lumineuses, qui ne sont que des réflexions de lumière, sur des panneaux de signalisation plus particulièrement.

En mettant en oeuvre un capteur monochrome, la seule information disponible sont les niveaux de gris représentatifs de l'intensité lumineuse reçue par le capteur.

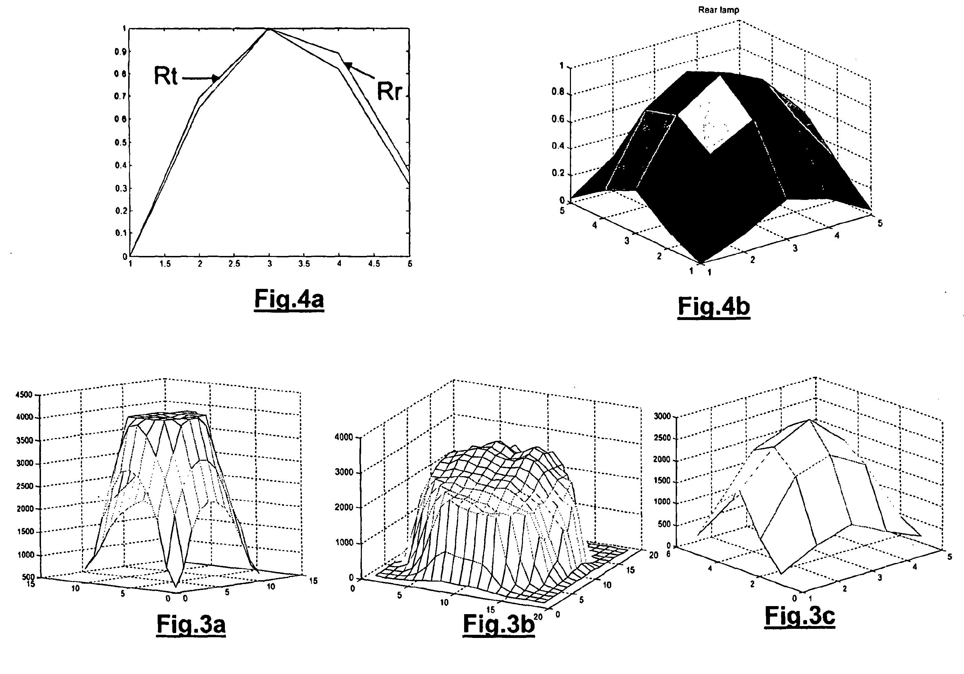

La figure 3a montre une représentation de la distribution de l'intensité lumineuse d'une source de lumière qui correspond à la lumière d'un projecteur à 100 mètres du véhicule équipé du dispositif. En axes x et y , on a la surface de la zone de l'image acquise par le capteur, en axe z on a l'intensité lumineuse de chaque pixel de la zone.

On voit de cette figure que l'intensité lumineuse est très forte par rapport à d'autres sources du type feux. On prend soin d'étalonner le capteur, de façon à ce que la lumière émise par un projecteur de véhicule soit la seule capable de saturer le capteur. Ainsi, dès qu'un seuil de saturation est franchi, le système de commande « sait » qu'il s'agit d'une lumière de projecteur, sans aller plus loin dans le traitement de la zone de l'image correspondant à cette lumière.

Les figures 3b et 3c représentent respectivement le même type de représentation en trois dimensions pour un panneau de signalisation routier et pour un feux arrière de véhicule, à 100 mètres du véhicule équipé du dispositif. La valeur maximale d'intensité lumineuse atteinte est similaire dans les deux cas, rendant la confusion possible. Mais on a constaté selon l'invention que la distribution correspondant à un panneau de signalisation (figure 3b) contient beaucoup de détails, alors que celle correspondant à un feu (figure 3c) suit approximativement la forme d'une gaussienne.

Selon l'invention, on exploite cette « signature » de la façon illustrée aux figures 4a et 4b : quand le capteur détecte dans une image une zone qui a globalement une distribution de type feu de véhicule/panneau de signalisation, on fait en deux dimensions (figure 4a) une coupe de l'amas de pixel passant par son centre de gravité, on calcule la distribution d'une courbe théorique Rt d'une gaussienne qui aurait les mêmes paramètres (sigma, écart-type ...). On réalise ensuite une mesure de similarité en calculant par exemple l'erreur quadratique moyenne d'approximation de la courbe réelle Rr par rapport à la courbe théorique Rt. On détermine ensuite si le niveau d'erreur atteint ou non un « seuil de similarité » prédéterminé: en deçà, il s'agit d'un panneau de signalisation, au-delà il s'agit d'un feu de véhicule.

On fait le même type de calcul en trois dimensions (figure 4b), on compare ensuite la distribution réelle et la distribution d'une gaussienne en trois dimensions (distribution théorique représentée, la distribution réelle étant masquée). Si le niveau d'erreur atteint ou pas un « seuil de similarité », on va corroborer ou non les résultats obtenus avec le calcul en deux dimensions. Par exemple, le seuil de similarité en deux dimensions peut être de 96%, alors que le seuil de similarité en trois dimensions est généralement choisi plus bas, de par exemple 92%.

L'invention permet également d'identifier/de discriminer des sources lumineuses correspondant à des feux de véhicule lointains (par exemple au-delà de 400 mètres). C'est l'étape C3 mentionnée plus haut, et illustrée par les figures 6a,6b, qui reprend les mêmes types de représentation qu'aux figures 4a,4b (représentation des variations d'intensité lumineuse). Les feux lointains apparaissent en effet sur les images comme deux points jumelés, avec une forme caractéristique :
- la figure 6b en fait une représentation en trois dimensions, montrant deux « bosses » caractéristiques, correspondant aux deux feux
- la figure 6a en fait une représentation en deux dimensions.

Une étape selon l'invention consiste donc à discriminer les petites taches jumelées, de faible intensité, correspondant à des feux de véhicules éloignés, grâce à leur »signature » en niveaux d'intensité lumineuse.

Ces calculs sont réitérés sur plusieurs images acquises successivement, pour vérifier la concordance des résultats obtenus avant qu'ils ne déclenchent éventuellement un basculement d'un mode d'éclairage à un autre du projecteur.

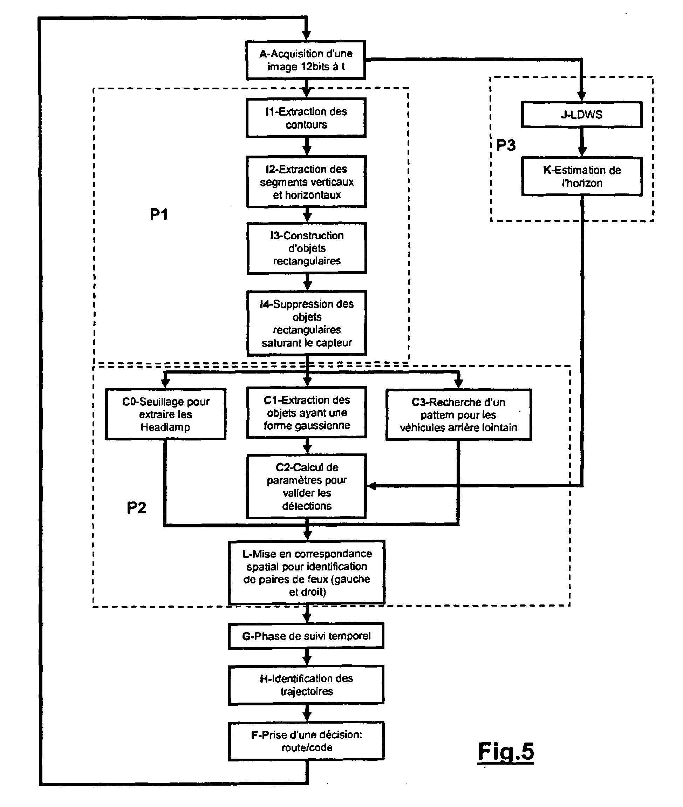

La figure 5 décrit maintenant un algorithme complet d'un procédé de commutation route/code selon l'invention.

Si le mode de réalisation décrit ici concerne une commande d'une commutation d'un mode « route » à un mode « code », il existe aussi naturellement des stratégies appropriées de commande automatique de retour d'un mode « code » à un mode « route », notamment prenant ne compte l'identification et le suivi des trajectoires des sources lumineuses, et de la présence ou non de virage sur la route.

L'algorithme comprend trois parties délimitées par des lignes pointillées : la partie P1 qui correspond à un prétraitement des images (qui peut rester optionnelle), la partie P2 qui met en oeuvre plus spécifiquement l'invention, et la partie P3 (qui peut rester optionnelle comme P1) qui concerne un traitement supplémentaire des images détaillé plus loin.

L'algorithme se décompose de la façon suivante :
- étape A-d'acquisition d'image par le capteur
- prétraitement des images P1 comprenant
   - étape I1 d'extraction des contours des zones des images correspondant à des sources de lumière
   - étape I2 d'extraction des segments verticaux et horizontaux des dites zones
   - étape I3 de construction d'objets rectangulaires à partir des segments obtenus en I2
   - étape I4: suppression des objets de contour rectangulaire identifiés en I3, qui saturent le capteur (correspondant aux surfaces très réfléchissantes des poteaux en bord de route)
- Traitement P2 des images se décomposant en
   - étape C0 de seuillage pour extraire les zones correspondant à des lumières de projecteurs
   - étape C1 d'extraction des objets ayant une forme gaussienne
   - étape C2 de calcul des paramètres des objets de l'étape C1 (calcul de mesure de similarité)
   - étape C3 de recherche de modèle pour les lumières émises par les véhicules arrière lointains

Les étapes C1 et C3 sont faites en parallèle : si les zones correspondant à une source de lumière dans l'image sont trop petites dans l'image, on ne fait pas le traitement des étapes C1 et C2, mais le traitement C3.
- étape L de mise en correspondance spatiale pour identifier les paires de feux : si deux sources de lumière sont très proches et ressemblantes, et qu'elles se déplacent en même temps, cette étape permet d'augmenter le degré de confiance dans l'identification des sources faite à l'étape C2.

D'autres étapes suivent le traitement P2 :
- étape G de suivi temporel, suivi par une étape H d'identification des trajectoires : ces deux étapes sont liées, dans la mesure où le suivi temporel permet d'obtenir une identification de trajectoire
- étape F de prise de décision d'un passage du mode « route » au mode « code »

Le traitement P3 prévoit, après l'étape A d'acquisition initiale des images, une étape J de détection des bords de route (LDWS), dont les résultats permettent d'estimer, lors de l'étape K, la position de l'horizon. Situer l'horizon permet de valider une différenciation entre un feu/une lumière de moto et un panneau de signalisation par exemple.

Toutes les étapes sont réitérées pour toute nouvelle acquisition d'image, permettant ainsi de mettre à jour la détection des sources déjà détectées (ce qui permet d'avoir un historique des positions de la source, de l'aire de la zone correspondant à la source ...), avant que ne soit prise une décision de commande à l'étape F. (Le capteur est apte à prendre au moins 10 images par seconde).

En conclusion, ce type de traitement permet de discriminer aisément un certain nombre de sources lumineuses sans avoir recours à un capteur couleur. Des étapes supplémentaires optionnelles de prétraitement ou de traitement des images permettent d'augmenter encore la fiabilité de la détection.

## Revendications

1. Procédé pour commander une commutation automatique de projecteur (13) d'un véhicule, notamment d'un véhicule automobile, d'un premier mode d'éclairage vers un second mode d'éclairage, ledit procédé étant mis en oeuvre en conduite nocturne dans ledit véhicule et comprenant des étapes suivantes :
a- acquisition d'images (IM) représentant des scènes nocturnes de route
b- extraction dans les images des zones correspondant à des sources de lumière,
c- discrimination du type de sources lumineuses
**caractérisé en ce que** l'acquisition d'images s'effectue par un capteur noir et blanc, et la discrimination du type de source s'effectue selon la distribution des niveaux d'intensités lumineuses dans lesdites zones.

2. Procédé selon la revendication précédente, **caractérisé en ce que** l'étape c- de discrimination du type de sources lumineuse comprend une sous étape c0 de seuillage des zones permettant d'identifier des sources de lumière de type A saturant en intensité lumineuse le capteur, dont les lumières de projecteurs de véhicule croisant.

3. Procédé selon la revendication précédente, **caractérisé en ce que** l'étape c- de discrimination du type de sources lumineuse comprend une sous étape c3 de recherche de modèle pour les lumières émises par les véhicules arrière lointains.

4. Procédé selon la revendication précédente 2 ou 3, **caractérisé en ce que** l'étape c- de discrimination comprend
C1-la détermination des niveaux d'intensité lumineuses dans les zones non seuillées et,
C2- une mesure de similarité entre la distribution des niveaux d'intensité lumineuse de chaque zone non seuillée et une distribution modélisée.

5. Procédé selon la revendication précédente, **caractérisé en ce que** ladite distribution modélisée en une distribution modélisée de type gaussienne.

6. Procédé selon la revendication précédente, **caractérisé en ce que** l'étape c- de discrimination trie les zones de lumière selon qu'elles sont au-delà ou en deçà d'un niveau de similarité donné, les zones au-delà dudit niveau correspondant à des sources de lumière de type B comprenant les feux arrière de véhicule, les zones en-deça dudit niveau correspondant à des sources de lumières secondaires de type C comme des panneaux de signalisation réfléchissants.

7. Procédé selon la revendication précédente, **caractérisé en ce qu'**il comprend l'étape de
e- commande de la commutation du projecteur d'un mode d'éclairage à un autre mode d'éclairage prenant en compte les résultats de l'étape c- de discrimination, notamment commande d'un mode d'éclairement de type route à un mode d'éclairement de type code en cas d'identification de sources lumineuses de type A ou de type B, ou maintien en mode route en cas d'identification de sources lumineuse de type C.

8. Procédé selon la revendication précédente, **caractérisé en ce que** les étapes a- d'acquisition, b- d'extraction, c- de discrimination au moins sont répétées plusieurs fois, et leurs résultats comparés avant de déclencher, en cas de concordance, l'étape e- de commande de commutation.

9. Procédé selon l'une des revendications précédentes, **caractérisé en ce qu'**il comprend aussi une étape g- de suivi temporel des déplacements des zones correspondant à des sources de lumière, suivi d'une étape h- d'identification des trajectoires des zones correspondant à des sources de lumière.

10. Procédé selon l'une des revendications précédentes, **caractérisé en ce qu'**il comprend aussi une étape i- après l'étape ad'acquisition d'images, ladite étape i- visant à supprimer des images les zones correspondant à des sources de lumière secondaires de formes géométriques prédéterminées.

11. Procédé selon la revendication précédente, **caractérisé en ce que** l'étape i- comprend une extraction des contours de la zone correspondant à une source lumineuse dans l'image, une extraction des segments linéaires, notamment horizontaux et verticaux, de ladite zone, une constructions d'objets géométriques à partir de ces segments, puis une suppression desdits objets correspondent à des formes géométriques prédéterminées, notamment des formes rectangulaires représentant les zones réfléchissantes de poteaux de signalisation.

12. Procédé selon l'une des revendications précédentes, **caractérisé en ce qu'**il comporte une étape j- de détection des bords de voie de roulage LDWS, suivi d'une étape h- d'estimation de la localisation de l'horizon dans les images acquises à l'étape a-.

13. Dispositif pour commander une commutation automatique de projecteur (13) d'un véhicule, notamment d'un véhicule automobile, d'un premier mode d'éclairement vers un second mode d'éclairement, ledit dispositif étant activé en conduite nocturne dans ledit véhicule, comprenant :
a- des moyens (10) d'acquisition d'images (IM) réprésentant des scènes nocturnes de route,
b- des moyens d'extraction dans les images (IM) des zones correspondant à des sources de lumière,
c- des moyens de discrimination du type de sources lumineuses
**caractérisé en ce que** les moyens d'acquisition d'images comprennent un capteur noir et blanc, et **en ce que** la discrimination du type de sources lumineuses s'effectue selon la distribution des niveaux d'intensités lumineuses dans lesdites zones,

14. Dispositif selon la revendication précédente, **caractérisé en ce qu'**il comprend
f- des moyens de commande des projecteurs d'un mode d'éclairage à un autre mode d'éclairage prenant en compte les résultats obtenus avec les moyens c- de discrimination.

15. Dispositif selon la revendication 13 ou 14, **caractérisé en ce que** le capteur est partagé avec au moins un autre dispositif équipant ledit véhicule.

16. Moyen (21, 23) de stockage d'information, **caractérisé en ce qu'**il mémorise un ou plusieurs programmes dont l'exécution autorise une mise en oeuvre du procédé selon l'une des revendications 1 à 12.

17. Programme d'ordinateur sur un moyen de stockage d'information, comportant une ou plusieurs séquences d'instructions exécutables par un microprocesseur et/ou un ordinateur, l'exécution desdites séquences d'instructions autorisant une mise en oeuvre du procédé selon l'une quelconque des revendications 1 à 12.

## Claims

1. Method for commanding automatic switching of headlights (13) of a vehicle, in particular a motor vehicle, from a first lighting mode to a second lighting mode, the said method being implemented during night-time driving in the said vehicle, and comprising the following steps:
a. acquisition of images (IM) representing night-time scenes of the road.
b. extraction from the images of the areas corresponding to sources of light.
c. discrimination of the type of sources of light, **characterised in that** the acquisition of the images is carried out by a black and white sensor, and the discrimination of the type of source is carried out according to the distribution of the levels of light intensity in the said areas.

2. Method according to the preceding claim, **characterised in that** the step c. of discrimination of the type of sources of light comprises a sub-step c0 of thresholding of the areas, thus making it possible to identify sources of light of type A which saturate the sensor with light intensity, including the lights of headlights of an oncoming vehicle.

3. Method according to the preceding claim, **characterised in that** the step c. of discrimination of the type of sources of light comprises a sub-step c3 of searching for a model for the lights emitted by distant vehicles to the rear.

4. Method according to the preceding claim 2 or 3, **characterised in that** the step c. of discrimination comprises:
C1 - the determination of the levels of light intensity in the areas which are not thresholded; and
C2 - measurement of similarity between the distribution of the levels of light intensity of each area which is not thresholded, and a modelled distribution.

5. Method according to the preceding claim, **characterised in that** the said modelled distribution is a modelled distribution of the Gaussian type.

6. Method according to the preceding claim, **characterised in that** the step c. of discrimination sorts the areas of light according to whether they are above or below a given level of similarity, the areas which are above the said level corresponding to sources of light of type B, comprising vehicle rear lights, and the areas which are below the said level corresponding to secondary source of light of type C, such as reflective traffic signs.

7. Method according to the preceding claim, **characterised in that** it comprises the step of:
e. - commanding the switching of the headlight from one lighting mode to another lighting mode which takes into account the results of the step c. of discrimination, in particular the command from a lighting mode of the high-beam type to a lighting mode of the low-beam type, in the case of identification of sources of light of type A or type B, or remaining in the high-beam mode, in the case of identification of sources of light of type C.

8. Method according to the preceding claim, **characterised in that** the steps a. of acquisition, b. of extraction, and c. of discrimination, at least, are repeated several times, and their results are compared, before triggering the step e. of commanding the switching, in the event of coincidence.

9. Method according to one of the preceding claims, **characterised in that** it also comprises a step g. of temporal monitoring of the displacements of the areas corresponding to sources of light, followed by a step h. of identification of the trajectories of the areas corresponding to sources of light.

10. Method according to one of the preceding claims, **characterised in that** it also comprises a step i., after step a. of acquisition of images, the said step i. being intended to eliminate from the images the areas that correspond to secondary sources of light with predetermined geometric forms.

11. Method according to the preceding claim, **characterised in that** the step i. comprises extraction of the contours of the area corresponding to a source of light in the image, extraction of linear segments, which in particular are horizontal and vertical, from the said area, construction of geometric objects from these segments, then elimination of the said objects corresponding to predetermined geometric forms, in particular rectangular forms, representing the reflective areas of signposts.

12. Method according to one of the preceding claims, **characterised in that** it comprises a step j. of detection of the edges of traffic lanes LDWS, followed by a step h. of estimation of the location of the horizon in the images acquired in step a.

13. Device for commanding automatic switching of headlights (13) of a vehicle, in particular a motor vehicle, from a first lighting mode towards a second lighting mode, the said device being activated during night-time driving in the said vehicle, and comprising:
a. means (10) for acquisition of images (IM) representing night-time scenes of the road.
b. means for extraction from the images (IM) of the areas corresponding to sources of light.
c. means for discrimination of the type of sources of light, **characterised in that** the means for acquisition of images comprise a black and white sensor, and **in that** the discrimination of the type of sources of light is carried out according to the distribution of the levels of light intensity in the said areas.

14. Device according to the preceding claim, **characterised in that** it comprises:
f. - means for commanding headlights from one lighting mode to another lighting mode, taking into account the results obtained with the means c. for discrimination.

15. Device according to claim 13 or 14, **characterised in that** the sensor is shared with at least one other device which equips the said vehicle.

16. Means (21, 23) for storage of data, **characterised in that** it stores one or a plurality of programmes, the execution of which permits implementation of the method according to one of claims 1 to 12.

17. Computer programme in a data storage means, comprising one or a plurality of sequences of instructions which can be executed by a microprocessor and/or a computer, the execution of the said sequences of instructions permitting implementation of the method according to any one of claims 1 to 12.

## Patentansprüche

1. Verfahren zum Steuern einer automatischen Umschaltung eines Scheinwerfers (13) eines Fahrzeugs, insbesondere eines Kraftfahrzeugs, von einem ersten Beleuchtungsmodus in einen zweiten Beleuchtungsmodus, wobei das Verfahren im Fahrzeug bei Nachtfahrt durchgeführt wird und die folgenden Schritte umfasst:
a) Erfassen von Bildern (IM), die Straßenszenen bei Nacht darstellen,
b) Extrahieren von Lichtquellen entsprechenden Bereichen aus den Bildern,
c) Unterscheiden des Typs der Lichtquellen,
**dadurch gekennzeichnet, dass** die Bilderfassung durch einen Schwarz-Weiß-Sensor erfolgt und die Unterscheidung des Lichtquellentyps gemäß der Verteilung der Helligkeitsgrade in den Bereichen erfolgt.

2. Verfahren nach dem vorhergehenden Anspruch,
**dadurch gekennzeichnet, dass** der Schritt c) zur Unterscheidung des Lichtquellentyps einen Unterschritt c0) zum Erstellen eines Schwellenwertvergleichs von Bereichen umfasst, der das Identifizieren von Lichtquellen vom Typ A erlaubt, die den Sensor mit Licht sättigen, darunter das Scheinwerferlicht entgegenkommender Fahrzeuge.

3. Verfahren nach dem vorhergehenden Anspruch,
**dadurch gekennzeichnet, dass** der Schritt c) zur Unterscheidung des Lichtquellentyps einen Unterschritt c3) zum Ermitteln eines Modells für das von entfernten nachfolgenden Fahrzeugen emittierte Licht umfasst.

4. Verfahren nach dem vorhergehenden Anspruch 2 oder 3,
**dadurch gekennzeichnet, dass** der Unterscheidungsschritt c) umfasst:
c1) Bestimmen der Helligkeitsgrade in den schwellenwertvergleichsfreien Bereichen, und
c2) Messen der Ähnlichkeit zwischen der Verteilung der Helligkeitsgrade jedes schwellenwertvergleichsfreien Bereichs und einer modellierten Verteilung.

5. Verfahren nach dem vorhergehenden Anspruch,
**dadurch gekennzeichnet, dass** die modellierte Verteilung eine modellierte Verteilung vom Typ Gaußsche Verteilung ist.

6. Verfahren nach dem vorhergehenden Anspruch,
**dadurch gekennzeichnet, dass** der Unterscheidungsschritt c) die Lichtbereiche danach sortiert, ob diese über oder unter einem gegebenen Ähnlichkeitsgrad liegen, wobei die über diesem Grad liegenden Bereiche Lichtquellen vom Typ B entsprechen, die Fahrzeugrückleuchten umfassen, wobei die unter diesem Grad liegenden Bereiche Lichtquellen vom Typ C entsprechen, wie etwa reflektierende Verkehrsschilder.

7. Verfahren nach dem vorhergehenden Anspruch,
**dadurch gekennzeichnet, dass** es den Schritt umfasst:
e) Steuern der Umschaltung des Scheinwerfers von einem Beleuchtungsmodus in einen anderen Beleuchtungsmodus unter Berücksichtigung der Ergebnisse aus dem Unterscheidungsschritt c), insbesondere Wechsel von einem Beleuchtungsmodus vom Typ Fernlicht in einen Beleuchtungsmodus vom Typ Abblendlicht bei Identifizierung von Lichtquellen vom Typ A oder vom Typ B, oder Beibehaltung des Fernlichtmodus bei Identifizierung von Lichtquellen vom Typ C.

8. Verfahren nach dem vorhergehenden Anspruch,
**dadurch gekennzeichnet, dass** wenigstens die Schritte a) Erfassen, b) Extrahieren, c) Unterscheiden mehrfach wiederholt werden und das Ergebnis daraus verglichen wird, bevor im Falle der Übereinstimmung Schritt e) Steuern der Umschaltung gestartet wird.

9. Verfahren nach einem der vorhergehenden Ansprüche,
**dadurch gekennzeichnet, dass** es auch einen Schritt g) zum zeitlichen Verfolgen der Bewegung der Lichtquellen entsprechenden Bereiche umfasst, gefolgt von einem Schritt h) zum Identifizieren der Bahnen der Lichtquellen entsprechenden Bereiche.

10. Verfahren nach einem der vorhergehenden Ansprüche,
**dadurch gekennzeichnet, dass** es nach dem Schritt a) Bilderfassung auch einen Schritt i) umfasst, wobei der Schritt i) zum Ziel hat, die Zusatzlichtquellen mit vorbestimmten geometrischen Formen entsprechenden Bereiche in den Bildern zu unterdrücken.

11. Verfahren nach dem vorhergehenden Anspruch,
**dadurch gekennzeichnet, dass** der Schritt i) umfasst: Extrahieren der Umrisse des einer Lichtquelle entsprechenden Bereichs in dem Bild, Extrahieren der geradlinigen, insbesondere horizontalen und vertikalen Segmente dieses Bereichs, Konstruieren geometrischer Objekte anhand dieser Segmente und anschließendes Unterdrücken dieser Objekte, die vorbestimmten geometrischen Formen entsprechen, insbesondere rechteckiger Formen, die die reflektierenden Bereiche von Markierungspfosten darstellen.

12. Verfahren nach einem der vorhergehenden Ansprüche,
**dadurch gekennzeichnet, dass** es einen Schritt j) zum Erkennen der Fahrspurränder LDWS umfasst, gefolgt von einem Schritt h) zum Abschätzen der Lokalisierung des Horizonts in den im Schritt a) erfassten Bildern.

13. Vorrichtung zum Steuern einer automatischen Umschaltung eines Scheinwerfers (13) eines Fahrzeugs, insbesondere eines Kraftfahrzeugs, von einem ersten Beleuchtungsmodus in einen zweiten Beleuchtungsmodus, wobei die Vorrichtung im Fahrzeug bei Nachtfahrt aktiviert ist, umfassend:
a) Mittel (10) zum Erfassen von Bildern (IM), die Straßenszenen bei Nacht darstellen,
b) Mittel zum Extrahieren von Lichtquellen entsprechenden Bereichen aus den Bildern (IM),
c) Mittel zum Unterscheiden des Typs der Lichtquellen,
**dadurch gekennzeichnet, dass** die Mittel zur Bilderfassung einen Schwarz-Weiß-Sensor umfassen und dass die Unterscheidung des Lichtquellentyps gemäß der Verteilung der Helligkeitsgrade in diesen Bereichen erfolgt.

14. Vorrichtung nach dem vorhergehenden Anspruch,
**dadurch gekennzeichnet, dass** sie umfasst:
f) Mittel zum Steuern der Scheinwerfer von einem Beleuchtungsmodus in einen anderen Beleuchtungsmodus unter Berücksichtigung der mit den Unterscheidungsmitteln c) erzielten Ergebnisse.

15. Vorrichtung nach Anspruch 13 oder 14,
**dadurch gekennzeichnet, dass** der Sensor mit wenigstens einer anderen im Fahrzeug vorhandenen Vorrichtung gemeinsam genutzt wird.

16. Mittel (21, 23) zur Datenspeicherung,
**dadurch gekennzeichnet, dass** es ein oder mehrere Programme speichert, deren Ausführung die Durchführung des Verfahrens nach einem der Ansprüche 1 bis 12 gestattet.

17. Computerprogramm auf einem Datenspeichermittel, mit einer oder mehreren von einem Mikroprozessor und/oder einem Rechner ausführbaren Befehlssequenzen, wobei die Ausführung der Befehlssequenzen eine Durchführung des Verfahrens nach einem der Ansprüche 1 bis 12 gestattet.
